# EUROPEAN PATENT SPECIFICATION

(11) **EP 2 903 373 B1**
(45) Date of publication and mention of the grant of the patent: **01.11.2017**
(21) Application number: 13840930.5
(22) Date of filing: 10.09.2013
(51) Int. Cl.: H04W 72/04, H04W 24/10, H04L 5/00, H04W 24/02, H04W 36/00, H04W 74/00, H04W 76/04

(54) **USER EQUIPMENT FOR CARRIER AGGREGATION**
BENUTZERGERÄT FÜR DEN TRÄGER AGGREGATION
ÉQUIPEMENT UTILISATEUR POUR L'AGRÉGATION DU PORTEUR

(30) Priority: 28.09.2012 JP 2012216832; 21.02.2013 JP 2013031908
(43) Date of publication of application: 05.08.2015
(73) Proprietor: NTT DOCOMO, INC., Chiyoda-ku Tokyo 100-6150 (JP)
(72) Inventor: UCHINO, Tooru, Tokyo 100-6150 (JP); SAGAE, Yuta, Tokyo 100-6150 (JP)
(74) Representative: Hoffmann Eitle
(86) International application number: PCT/JP2013/074296
(87) International publication number: WO 2014/050529

(56) References cited:
- WO-A1-2012/067333
- ITRI: "CQI report at SCell Activation", 3GPP DRAFT; R2-110371_ CQI REPORT AT SCELL ACTIVATION_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dublin, Ireland; 20110117, 11 January 2011 (2011-01-11), XP050493012, [retrieved on 2011-01-11]
- 'CQI Reporting at Activation' 3GPP TSG-RAN WG2 MEETING #72BIS R2-110113 17 January 2011, pages 1 - 4, XP050474622
- 'CQI measurement and reporting on SCell activation' TSG-RAN WG2#72BIS R2-110296 17 January 2011, pages 1 - 3, XP050474706
- 'Way Forward on CSI reporting for CA' 3GPP TSG-RAN1#65 R1-111940 09 May 2011, pages 1 - 10, XP050491568

## Description

### TECHNICAL FIELD

The present invention relates to a mobile station and a radio base station.

### BACKGROUND ART

In LTE (Long Term Evolution) -Advanced, a mobile station UE is configured to be capable of performing CA (Carrier Aggregation) using multiple cells (or CC: Component Carriers) .

When the CA is performed, a Pcell (Primary cell) which is a highly reliable cell guaranteeing connectivity and an Scell (Secondary cell) which is a supplementary cell are configured for a mobile station UE.

The mobile station UE firstly connects to the Pcell and then can add the Scell as needed.

The Pcell is a cell similar to an LTE cell which supports RLM (Radio Link Monitoring), SPS (Semi-Persistent Scheduling) and the like. When the mobile station UE changes the Pcell to another cell, handover processing is needed.

On the other hand, the Scell is a cell configured for the mobile station UE in addition to the Pcell. The Scell is added and deleted by RRC (Radio Resource Control) signaling.

The Scell is a cell which is in a deactive state just after being configured for the mobile station UE, and is enabled to perform communications (be schedulable) only after being activated in a MAC (Media Access Control) layer.

In other words, the Scell can be in either an active state or a deactive state.

Here, the active state is a state where communications can be performed in the Scell. When the Scell is in the active state, the mobile station UE monitors a PDCCH (Physical Downlink Control Channel) in the Scell and repots CSI (Chanel State Indicator) in the Scell to the radio base station eNB.

On the other hand, the deactive state is a state where communications cannot be performed in the Scell and battery saving can be achieved.

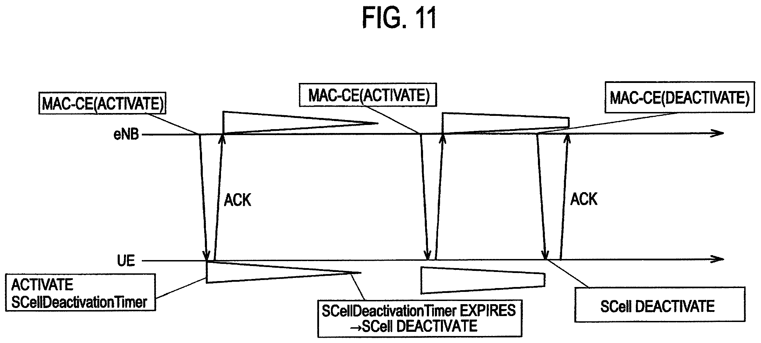

As illustrated in Fig. 11, the mobile station UE is configured to transition an Scell in a deactive state to an active state when receiving an activation command (re-activation command) for the Scell through "Activation MAC-CE, " and to transition the Scell in the active state to the deactive state when receiving a deactivation command for the Scell through "Deactivation MAC-CE."

Also, the mobile station UE is configured to transition the Scell in the active state to the deactive state when "sCellDeactivationTimer" expires.

Moreover, the mobile station UE is configured to activate "sCellDeactivationTimer" when the deactive Scell is transitioned to the active state.

The mobile station UE and the radio base station eNB are both configured to manage "sCellDeactivationTimer" and match the states of each managed Scell between the mobile station UE and the radio base station eNB.

### PRIOR ART DOCUMENT

### NON-PATENT DOCUMENT

Non-patent document 1: 3GPP TS36.300

"CQI measurement and reporting on SCell activation", TSG-RAN WG2#72BIS R2-110296, pages 1-3, 17 January 2011 relates to CQI measurement and reporting on SCell activation. CQI/SRS reporting cannot start before the SCell becomes activated as defined by the timing. For CQI, relationship between measurement and report to be clarified by RAN1. CQI/SRS transmissions - if configured - shall start when the SCell becomes activated as defined by the timing.

WO 2012/067333 A1 relates to carrier aggregation management and related device and system. This document discloses the UE obtaining information suggesting that an activation / deactivation command to activate / deactivate an SCell is likely to be received by the UE from the base station, said information obtaining taking place before said activation / deactivation command is actually received; activating / deactivating an SCell as early as possible after said activation / deactivation command is received by the UE from the base station. When an eNB sends an activation/deactivation MAC CE command to a UE for activating / deactivating an SCell, it must then wait for a certain amount of time before it can start or stop scheduling the UE on the newly activated / deactivated SCell. Likewise, the UE cannot immediately start or stop sending and reporting data or information (e.g. SRS, CSI, etc.) with respect to the newly activated / deactivated Scell.

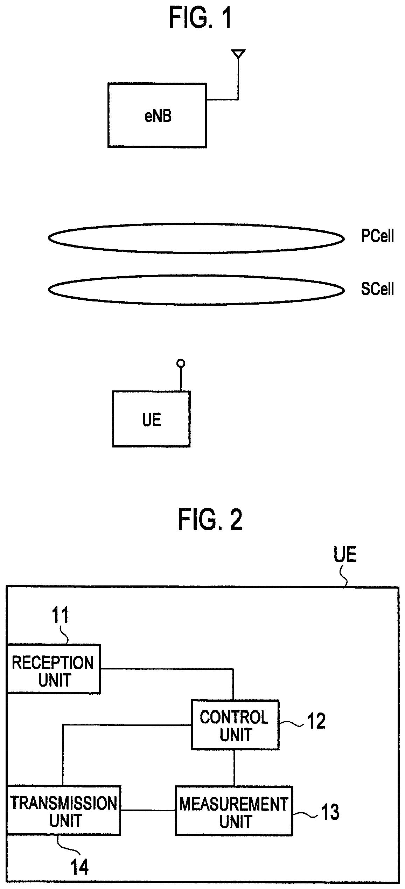

ITRI, "CQI report at SCell Activation", 3GPP DRAFT, R2-110371_ CQI REPORT AT SCELL ACTIVATION_V2, 3RD GENERATION PARTNERSHIP PROJECT (3GPP), MOBILE COMPETENCE CENTRE, 650, ROUTE DES LUCIOLES ; F-06921 SOPHIA-ANTIPOLIS CEDEX, FRANCE, vol. RAN WG2, no. Dublin, Ireland, 11 January 2011 relates to CQI report at SCell Activation. Here, figure 1 relates to an activation command for a deactivated Scell. Figure 2 relates to an activation command for an activated Scell.

### SUMMARY OF THE INVENTION

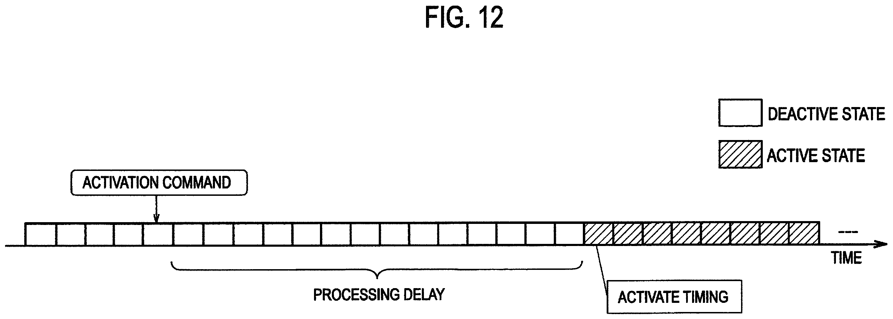

However, as illustrated in Fig. 12 , even when receiving an activation command for a deactive Scell, a mobile station UE cannot transition the Scell promptly to the deactive state due to processing delay (for example, processing delay due to RF retuning).

Here, the processing delay required for activating the Scell varies depending on the status of the mobile station UE (for example, downlink synchronization is established, measurement processing is performed, or the like). For this reason, there is a problem that a radio base station eNB cannot recognize the status of the mobile station UE nor therefor recognize a time point when transition of the Scell to the active state is completed.

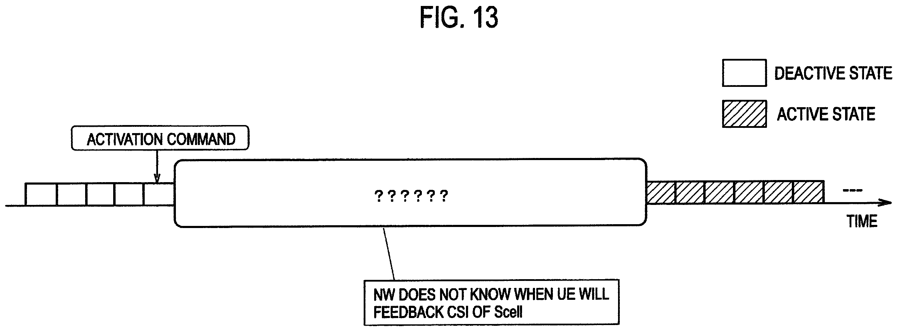

In this case, as illustrated in Fig. 13, there is a problem that the radio base station eNB cannot perform proper "Rate marching" because it does not recognize when reporting of CSI in the Scell will start.

Accordingly, the invention has been made in view of the above problems, and an objective of the invention is to provide a mobile station and a radio base station, with which a radio base station eNB can recognize a time point when the transition of an Scell to an active state is actually completed.

The object of the invention is achieved by the subject-matter of the independent claims. The dependent claims describe advantageous embodiments.

### BRIEF DESCRIPTION OF THE DRAWINGS

[Fig. 1] Fig. 1 is an overall configuration diagram of a mobile communication system according to a first embodiment of the invention.
[Fig. 2] Fig. 2 is a functional block diagram of a mobile station according to the first embodiment of the invention.
[Fig. 3] Fig. 3 is a diagram for illustrating functions of the mobile station and a radio base station according to the first embodiment of the invention.
[Fig. 4] Fig. 4 is a functional block diagram of the radio base station according to the first embodiment of the invention.
[Fig. 5] Fig. 5 is a flowchart illustrating an operation of the mobile station according to the first embodiment of the invention.
[Fig. 6] Fig. 6 is drawing for illustrating functions of a mobile station and a radio base station according to Modification 2 of the invention.
[Fig. 7] Fig. 7 is drawing for illustrating functions of a mobile station and a radio base station according to Modification 3 of the invention.
[Fig. 8] Fig. 8 is drawing for illustrating functions of a mobile station and a radio base station according to Modification 4 of the invention.
[Fig. 9] Fig. 9 is drawing for illustrating functions of a mobile station and a radio base station according to Modification 5 of the invention.
[Fig. 10] Fig. 10 is drawing for illustrating functions of the mobile station and the radio base station according to Modification 5 of the invention.
[Fig. 11] Fig. 11 is a drawing for illustrating a conventional art.
[Fig. 12] Fig. 12 is a drawing for illustrating the conventional art.
[Fig. 13] Fig. 13 is a drawing for illustrating the convention art.

### MODE FOR CARRYING OUT THE INVENTION

### (Mobile communication system according to the first embodiment of the invention)

Described by referring Figs. 1 to 5 is a mobile communication system according to a first embodiment of the present invention.

As illustrated in Fig. 1, the mobile communication system according to the present embodiment is an LTE-Advanced mobile communication system, which includes a radio base station eNB managing a Pcell and an Scell and a mobile station UE.

Here, the Pcell and Scell may be managed by multiple radio base stations eNB or may be managed by the same radio base station eNB.

As illustrated in Fig. 2, the mobile station UE according to the embodiment includes a reception unit 11, a control unit 12, a measurement unit 13, and a transmission unit 14.

The reception unit 11 is configured to receive various kinds of signals from the radio base station eNB. For example, the reception unit 11 receives "Activation MAC-CE" which notifies an activation command and "Deactivation MAC-CE" which notifies a deactivation command from the radio base station eNB.

The control unit 12 is configured to perform various controls on the mobile station UE.

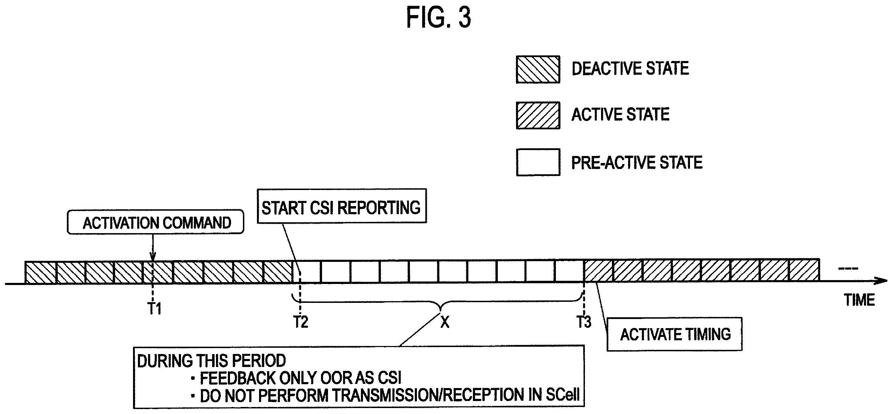

For example, as illustrated in Fig. 3, when an activation command for a deactive Scell is received by the reception unit 11 (T1), the control unit 12 commands the transmission unit 14 to start CSI reporting of the radio base station eNB in the Scell at predetermined timing (T2) earlier than a time point (T3) when the transition of the Scell to an active state is completed (T3).

The measurement unit 13 measures a CSI in the Scell based on the command from the control unit 12.

The transmission unit 14 is configured to report the CSI measured by the measurement unit 13 to the radio base station eNB based on the command from the control unit 12.

Here, the transmission unit 14 reports the CSI to the radio base station eNB at a predetermined time interval even during a time period X from the time point when the CSI reporting is started (T2) to the time point when the transition of the Scell to the active state is completed (T3).

It is assumed here that the Scell is in a pre-active state during the time period X. Also, the time period X is determined based on a status of the mobile station UE.

Here, the transmission unit 14 does not necessarily have to perform transmission/reception of signals in the Scell during the time period X.

Also, the transmission unit 14 may report a value which is out of a predetermined range (OOR: Out-Of-Range) as the CSI during the period X.

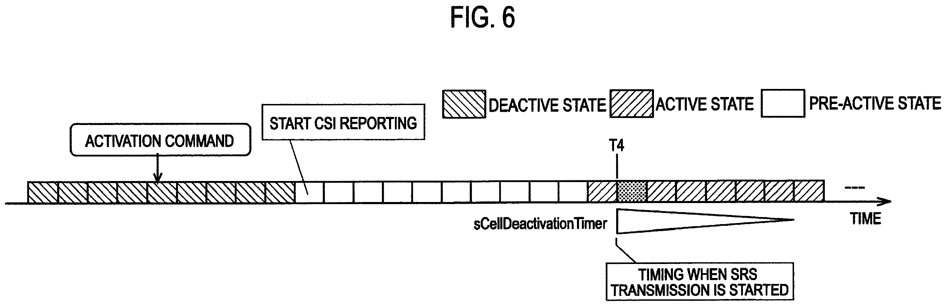

As illustrated in Fig. 6, the radio base station eNB according to the embodiment includes a control unit 21, a transmission unit 22, and a reception unit 23.

The control unit 21 is configured to perform various kinds of controls in the radio base station eNB. The transmission unit 22 is configured to transmit various kinds of signals to the mobile station UE. The reception unit 23 is configured to receive various kinds of signals from the mobile station UE.

Here, the transmission unit 22 transmits "Activation MAC-CE" which notifies an activation command for a deactive Scell of the mobile station UE and "Deactivation MAC-CE" which notifies a deactivation command for an active Scell of the mobile station UE.

Also, the reception unit 23 is configured to start acquiring the CSI in the Scell from the mobile station UE at predetermined timing (T2 in Fig. 3) after the transmission unit 22 transmits the activation command.

Furthermore, the control unit 21 is configured to determine that the transition of the Scell to the active state is not completed during the time period (the period X in Fig. 3) until valid CSI is reported from the mobile station UE.

When the Scell is in the pre-active state, the transition processing in the Scell to the active state is in process inside the mobile station UE. Thus, there is a possibility that the mobile station UE cannot perform transmission/reception in the Scell properly.

Accordingly, when valid CSI is reported from the mobile station UE, the control unit 21 can regard that the transition of the Scell to the active state is completed.

Here, the transmission unit 22 does not necessarily have to transmit signals to the mobile station UE during the time period (the time period X in Fig. 3) until valid CSI is reported from the mobile station UE.

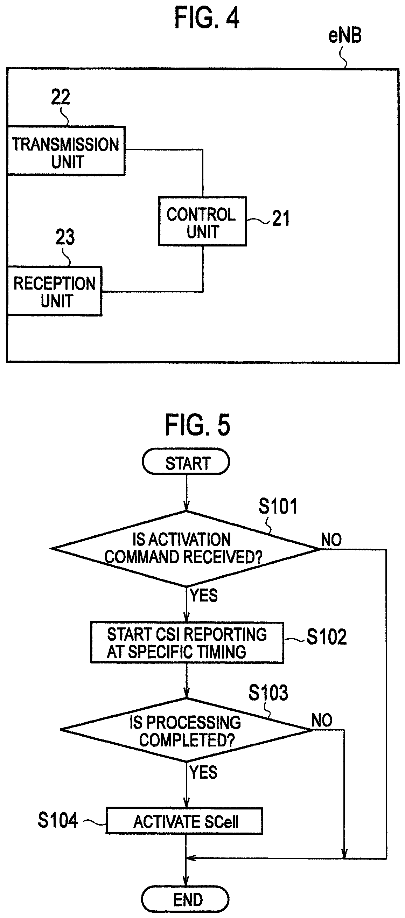

Described hereinafter by referring to Fig. 5 is an operation of the mobile station UE according to the embodiment.

As illustrated in Fig. 5, at step S101, the mobile station UE determines whether or not an activation command for the deactive Scell is received from the radio base station eNB.

In case of "Yes," the operation proceeds to step S102, while in case of "No," the operation is terminated.

At step S102, the mobile station UE reports the CSI in the Scell to the radio base station eNB at the predetermined timing (T2 in Fig. 3).

At step S103, the mobile station UE determines whether or not the processing on the activation of the Scell is completed.

In case of "Yes," the operation proceeds to step S104, while in case of "No," the operation is terminated.

At step S104, the mobile station UE transitions the Scell to the active state.

### (Modification 1)

A mobile communication system according to Modification 1 of the present invention is described by paying attention to differences from the mobile communication system according to the first embodiment.

In the mobile communication system according to Modification 1, a radio base station eNB is configured to manage "sCellDeactivationTimer" which is the same as that of a mobile station UE, and manage whether or not an Scell is in an active state depending on whether or not the "sCellDeactivationTimer" is activated.

Accordingly, it is basically preferable that the activation timings of the "sCellDeactivationTimer" of the radio base station eNB and the mobile station UE match each other.

On the other hand, the time point when the transition of the Scell to the active state is completed varies depending on the status of the mobile station UE, and accordingly a discrepancy may occur in "sCellDeactivationTimer" between the radio base station eNB and the mobile station UE.

Accordingly, in the mobile communication system according to Modification 1, the mobile station UE and the radio base station eNB are configured to activate (restart) "sCellDeactivationTimer" at predetermined activation timing regardless of the status of the mobile station UE.

For example, at the predetermined activation timing may be timing (T1 in Fig. 3) when an activation command for the deactive Scell is received in a mobile station UE, or may be timing (T3 in Fig. 3) when The reporting of CSI in the Scell is started in a mobile station UE (T2 in Fig. 3).

Here, T2 may be timing when the reporting of CSI in the Scell is actually started in the mobile station UE or may be first timing when the reporting of CSI in the Scell becomes possible in the mobile station UE.

Also, the predetermined activation timing may be timing based on the estimation of a maximum time period required by a mobile station UE to activate the Scell, in other words, earliest timing (a maximum value of Activate timing) at which the Scell is surely activated regardless of the status of the mobile station UE.

In other words, LTE-Advance specifies a requirement condition that the activation of an Scell has to be terminated by the maximum value of the Activate timing.

For example, three statuses of the mobile station UE are defined. When processing times required for activating an Scell in the respective statuses are 5 ms/10 ms/50 ms, the mobile station UE activates (restarts) "sCellDeactivationTimer" 50 ms after an activation command for the deactive Scell is received.

In other words, even though the mobile station UE completes the activation of the Scell 5 ms/10 ms after the activation command for the deactive Scell is received, the mobile station UE does not activate (restart) the "sCellDeactivationTimer" at that time point but activates (restarts) "sCellDeactivationTimer" after a lapse of further 45 ms/40 ms.

### (Modification 2)

Described hereinafter by referring to Fig. 6 is a mobile communication system according to Modification 2 of the present invention by paying attention to differences with the mobile communication system according to the first embodiment.

In the mobile communication system according to Modification 2, the predetermined activation timing is timing (T4 in Fig. 6) when transmission of SRS (Sounding Reference Signal) is started in a mobile station UE.

Here, T4 may be timing when the transmission of SRS is actually started in the mobile station UE or may be the first timing when the transmission of SRS becomes possible in the mobile station UE.

### (Modification 3)

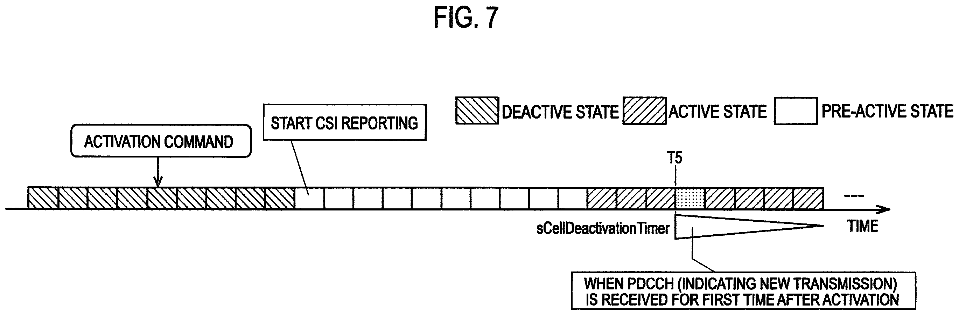

Described hereinafter by referring to Fig. 7 is a mobile communication system according to Modification 3 of the present invention by paying attention to differences with the mobile communication system according to the first embodiment.

In the mobile communication system, the predetermined activation timing is timing (T5 in Fig. 7) when a PDCCH (Physical Downlink Control Channel) signal indicating a new transmission for the first time after transition to an active state is performed in the mobile station UE is received.

Here, T5 may be timing when the PDCCH signal indicating the new transmission for the first time after the transition to the active state is performed in the mobile station UE is actually received or may be timing when a time frame including the timing when the PDCCH signal indicating the new transmission for the first time after the transition to the active state is performed in the mobile station UE is actually received.

### (Modification 4)

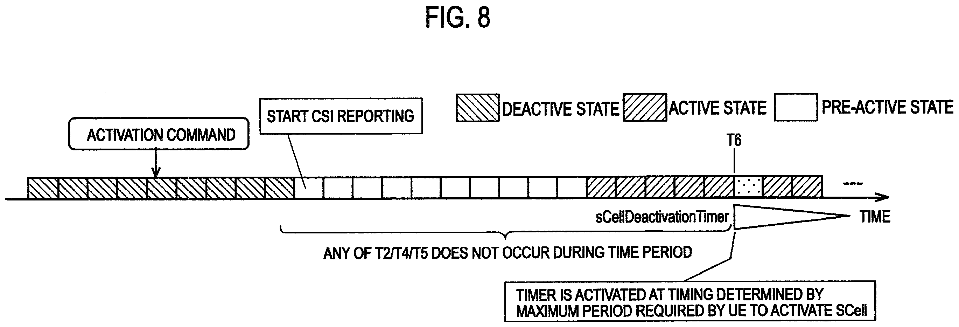

Described hereinafter by referring to Fig. 8 is a mobile communication system according to Modification 4 by paying attention to differences with the mobile station system according to the first embodiment.

In the mobile communication system according to Modification 4, the predetermined activation timing is any one of timing (T1 in Fig. 3) when an activation command for a deactive Scell is received in a mobile station UE, timing (T2 in Fig. 3) when a mobile station starts reporting of CSI in the Scell, timing (T4 in Fig. 6) when the mobile station UE starts transmission of SRS, or timing (T5 in Fig. 7) when the mobile station UE receives a first PDCCH signal indicating a new transmission after transition to an active state.

Here, in the mobile communication system according to Modification 4, as illustrated in Fig. 8, when the mobile station UE does not start reporting of CSI in the Scell, the mobile station UE does not start transmission of SRS, and the mobile station UE does not receive a PDCCH signal indicating a new transmission after the transition to the active state, "sCellDeactivationTimer" is activated (reactivated) at timing based on the estimation of the maximum time period required by the mobile station UE to activate the Scell (T6 in Fig. 8), in other words, earliest timing (a maximum value of Activate timing) when the Scell is surely activated regardless of the status of the mobile station UE.

### (Modification 5)

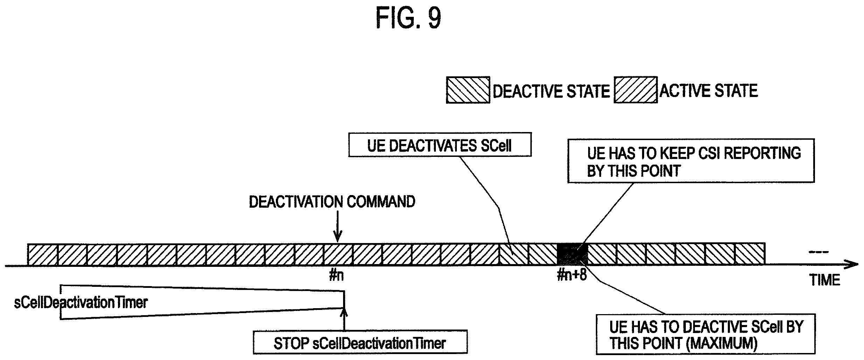

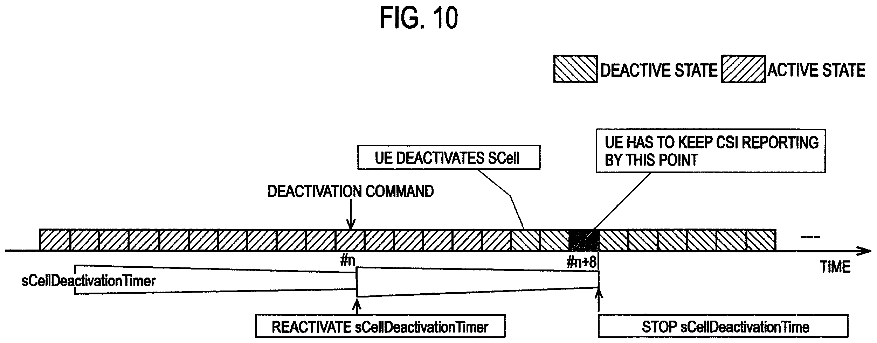

Described hereinafter by referring to Figs. 9 and 10 is a mobile communication system according to Modification 5 of the present invention by paying attention to differences with the mobile communication system according to the first embodiment.

In the mobile communication systems according to the first embodiment and Modifications 1 to 4, when the "sCellDeactivationTimer" is activated, a mobile station UE reports CSI in Scell to a radio base station eNB.

On the other hand, according to the specifications of TS36.321/TS36.213 of the 3GPP, as illustrated in Fig. 9, when it is determined that an Scell is deactivated in a sub-frame #n (when MAC-CE ("Deactivation Command") for deactivating the Scell is received or when "sCellDeactivationTimer" expires), the mobile station UE stops "sCellDeactivationTimer" of the Scell and deactivates the Scell up to a sub-frame #n+8, and stops The reporting of CSI in the Scell.

In other words, according to the specifications of TS36.321 of the 3GPP, even when "sCellDeactivationTimer" is not activated, the mobile station UE reports CSI in the Scell to the radio base station eNB.

In the mobile communication station according to Modification 5, as illustrated in Fig. 10, when it is determined that the Scell is deactivated in a sub-frame #n (when MAC-CE for deactivating the Scell is received or "sCellDeactivationTimer" expires), the mobile station UE activates (restarts) "sCellDeactivationTimer" and stops "sCellDeactivationTimer" after a predetermined time period, in other words, in the sub-frame #n+8.

As a result of this, the mobile communication system according to Modification 5 becomes consistent with the specifications of TS36.321/TS36.213 of the 3GPP.

The features of the present embodiment may also be expressed as follows.

A first feature of the present embodiment is summarized as a mobile station UE configured to be capable of performing CA (carrier aggregation) through a Pcell (primary cell) and an Scell (secondary cell), the mobile station UE including: a transmission unit 14 configured to, when an activation command for the Scell in a deactive state is received, start reporting CSI (channel state indicator information) in the Scell to a radio base station eNB at predetermined timing before a time point when transition of the Scell to an active state is completed. Here, the transmission unit 14 reports the CSI to the radio base station eNB at predetermined intervals even in a time period X from a time point when the reporting of the CSI is started to a time point when the transition of the Scell to the active state is completed.

With the above-described configuration, the radio base station eNB can recognize the time point when valid CSI is received from the mobile station UE as the time point when the transition of the Scell to an active state is actually completed.

In the first feature of the present embodiment, the transmission unit 14 may be kept from transmitting and receiving signals in the Scell during the time period X.

With the above-described configuration, transmission/reception of signals in the Scell in which there is a possibility of being incapable of performing transmission/reception properly because the transition processing to the active state is in process can be avoided.

In the first feature of the present embodiment, the transmission unit 14 may report a value out of a predetermined range as the CSI during the time period X.

With the above-described configuration, in the above-described time period X, invalid CSI is received. Thus, it can be recognized that the transition of the Scell to the active state is not completed.

In the first feature of the present embodiment, "sCellDeactivationTimer (deactivation timer) " managed for the Scell may be activated or reactivated at a time point when an activation command for the Scell is received.

In the first feature of the present embodiment, "sCellDeactivationTimer" managed for the Scell maybe activated or reactivated at the predetermined timing.

In the first feature of the present embodiment, "sCellDeactivationTimer" managed for the Scell maybe activated or reactivated at timing when the Scell is surely activated regardless of a status of the mobile station UE.

In the first feature of the present embodiment, at timing (T4 in Fig. 6) when a transmission of SRS is started, "sCellDeactivationTimer" managed for the Scell maybe activated or reactivated.

In the first feature of the present embodiment, at timing (T5 in Fig. 7) when a PDCCH signal indicating a new transmission is received for the first time after the transition to the active state, "sCellDeactivationTimer" managed for the Scell may be activated or reactivated.

In the first feature of the present embodiment, "sCellDeactivationTimer" managed for the Scell may be activated or reactivated at any of timing when the predetermined activation timing is any one of timing (T1 in Fig. 3) when an activation command for a deactive Scell is received, timing (T2 in Fig. 3) when reporting of CSI in the Scell is started, timing (T4 in Fig. 6) when the mobile station UE starts transmission of SRS, or timing (T5 in Fig. 7) when a first PDCCH signal indicating a new transmission is received after transition to an active state.

In the first feature of the present embodiment, in a case where the reporting of CSI in the Scell is not started, where a transmission of SRS is not started, and where a PDCCH signal indicating a new transmission is not received after the transition to the active state, "sCellDeactivationTimer" may be activated (reactivated) at timing (T6 in Fig. 8) based on the estimation of a maximum time period required by a mobile station UE to activate the Scell, in other words, earliest timing (a maximum value of Activate timing) at which the Scell is surely activated regardless of the status of the mobile station UE.

In the first feature of the present embodiment, "sCellDeactivationTimer" may be activated (reactivated) in a case where an deactivation of the Scell is determined (where MAC-CE for deactivating the Scell is received or where "sCellDeactivationTimer" expires), and may be stopped after a predetermined time period.

A second feature of the present embodiment is summarized as a radio base station eNB capable of communicating with a mobile station UE configured to be capable of performing CA through a Pcell and an Scell, the radio base station eNB including: a transmission unit 22 configured to transmit an activation command for a deactive Scell of the mobile station UE; a reception unit 23 configured to start acquiring CSI in the Scell from the mobile station UE at predetermined timing after the activation command is transmitted; and a control unit 21 configured to determine that a transition of the Scell to an active state is not completed during a time period until valid CSI is reported from the mobile station UE.

With the above-described configuration, the radio base station eNB can recognized that the transition of the Scell to the active state is not actually terminated until valid CSI is received from the mobile station UE.

In addition, in the above-example, description is provided for an example case where an activation command for a deactive secondary cell is received. However, a similar operation may be performed in a case where an activation command for an already-active secondary cell is further received.

It should be noted that the foregoing operations of the mobile stations UE and the radio base stations eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile stations UE and the radio base stations eNB. Otherwise, the storage medium and the processor may be provided as discrete components inside the mobile stations UE and the radio base stations eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention, which are determined by the description of the scope of claims. Therefore, the description of the specification is intended for illustrative explanation only and does not impose any limited interpretation on the present invention.

### INDUSTRIAL APPLICABILITY

As described above, the present invention can provide a mobile station and a radio base station, with which a radio base station eNB can recognize a time point when transition of an Scell to an active state is actually completed.

### EXPLANATION OF REFERENCE NUMERALS

- eNB: radio base station
- UE: mobile station
- 11, 23: reception unit
- 12, 21: control unit
- 13: measurement unit
- 14, 22: transmission unit

## Claims

1. A mobile station configured to perform carrier aggregation through a primary cell and a secondary cell, the mobile station comprising:
a transmission unit (14) configured to, when an activation command for the secondary cell in a deactive state is received, start reporting channel state indicator information in the secondary cell to a radio base station at predetermined timing before a time point when transition of the secondary cell to an active state is completed, wherein
the transmission unit (14) reports the channel state indicator information to the radio base station at predetermined intervals even in a time period from a time point when the reporting of the channel state indicator information is started to a time point when the transition of the secondary cell to the active state is completed.

2. The mobile station according to claim 1, wherein the transmission unit is kept from transmitting and receiving signals in the secondary cell during the time period.

3. The mobile station according to claim 1, wherein the transmission unit (14) reports a value out of a predetermined range as the channel state indicator information during the time period.

4. The mobile station according to claim 1, wherein a deactivation timer managed for the secondary cell is activated or reactivated at the predetermined timing.

5. The mobile station according to claim 1, wherein at timing when a PDCCH signal indicating a new transmission is received for the first time after the transition to the active state, a deactivation timer managed for the secondary cell is activated or reactivated.

## Patentansprüche

1. Mobilstation, die dazu ausgebildet ist, eine Träger-Aggregation durch eine primäre Zelle und eine sekundäre Zelle durchzuführen, die Mobilstation umfassend:
eine Übertragungseinheit (14), die dazu ausgebildet ist, wenn ein Aktivierungsbefehl für die in einem deaktivierten Zustand befindliche sekundäre Zelle empfangen wird, ein Melden einer Kanalzustandsindikatorinformation in der sekundären Zelle an eine Funkbasisstation zu einem vorbestimmten Timing vor einem Zeitpunkt, zu dem ein Übergang der sekundären Zelle in einen aktiven Zustand abgeschlossen ist, zu starten, wobei
die Übertragungseinheit (14) die Kanalzustandsindikatorinformation in vorbestimmten Intervallen an die Funkbasisstation meldet, selbst in einem Zeitraum von einem Zeitpunkt, zu dem das Melden der Kanalzustandsindikatorinformation gestartet wird, zu einem Zeitpunkt, zu dem der Übergang der sekundären Zelle in den aktiven Zustand abgeschlossen ist.

2. Mobilstation nach Anspruch 1, wobei die Übertragungseinheit während des Zeitraums davon abgehalten wird, Signale in der sekundären Zelle zu übertragen und zu empfangen.

3. Mobilstation nach Anspruch 1, wobei die Übertragungseinheit (14) während des Zeitraums einen Wert aus einem vorbestimmten Bereich als die Kanalzustandsindikatorinformation meldet.

4. Mobilstation nach Anspruch 1, wobei ein Deaktivierungs-Timer, der für die sekundäre Zelle betrieben wird, zu dem vorbestimmten Timing aktiviert oder reaktiviert wird.

5. Mobilstation nach Anspruch 1, wobei zu einem Timing, zu dem ein PDCCH-Signal, das eine neue Übertragung anzeigt, zum ersten Mal nach dem Übergang in den aktiven Zustand empfangen wird, ein Deaktivierungs-Timer, der für die sekundäre Zelle betrieben wird, aktiviert oder reaktiviert wird.

## Revendications

1. Station mobile configurée pour effectuer une agrégation de porteuses par l'intermédiaire d'une cellule primaire et d'une cellule secondaire, la station mobile comprenant :
une unité de transmission (14) configurée, lorsqu'une commande d'activation de la cellule secondaire dans un état désactivé est reçue, pour commencer à rapporter une information d'indicateur d'état de canal dans la cellule secondaire à une station de base radio à un cadencement prédéterminé avant un point dans le temps lorsqu'une transition de la cellule secondaire dans un état actif est terminée, dans laquelle
l'unité de transmission (14) rapporte l'information d'indicateur d'état de canal à la station de base radio à des intervalles prédéterminés même dans une période de temps à partir d'un point dans le temps quand le rapport de l'information d'indicateur d'état de canal commence à un point dans le temps lorsque la transition de la cellule secondaire dans l'état actif est terminée.

2. Station mobile selon la revendication 1, dans laquelle l'unité de transmission est empêchée de transmettre et de recevoir des signaux dans la cellule secondaire pendant la période de temps.

3. Station mobile selon la revendication 1, dans laquelle l'unité de transmission (14) rapporte une valeur en dehors d'une plage prédéterminée en tant qu'information d'indicateur d'état de canal pendant la période de temps.

4. Station mobile selon la revendication 1, dans laquelle un cadenceur de désactivation géré pour la cellule secondaire est activé ou réactivé au cadencement prédéterminé.

5. Station mobile selon la revendication 1, dans laquelle, à un cadencement où un signal PDCCH indiquant une nouvelle transmission est reçu pour la première fois après la transition vers l'état actif, un cadenceur de désactivation géré pour la cellule secondaire est activé ou réactivé.
